# EUROPÄISCHE PATENTSCHRIFT

(11) **EP 4 305 778 B1**
(45) Veröffentlichungstag und Bekanntmachung des Hinweises auf die Patenterteilung: **19.02.2025**
(21) Anmeldenummer: 21742330.0
(22) Anmeldetag: 02.07.2021
(51) Int. Cl.: H04B 17/364, H04B 17/391

(54) **VERFAHREN ZUM ERKENNEN EINER VERÄNDERUNG EINES ÜBERTRAGUNGSKANALSYSTEMS, FUNKMODUL SOWIE FUNKSYSTEM**
METHOD FOR DETECTING A CHANGE IN A COMMUNICATIONS CHANNEL SYSTEM, AND RADIO MODULE AND RADIO SYSTEM
PROCÉDÉ DE DÉTECTION D'UN CHANGEMENT DANS UN SYSTÈME DE CANAL DE COMMUNICATION, ET MODULE RADIO ET SYSTÈME RADIO

(30) Priorität: 08.03.2021 DE 102021105531
(43) Veröffentlichungstag der Anmeldung: 17.01.2024
(73) Patentinhaber: HELLA GmbH & Co. KGaA, 59552 Lippstadt (DE)
(72) Erfinder: KIRSCH, Oliver, 42111 Wuppertal (DE); WEGHAUS, Ludger, 59556 Lippstadt (DE); CURKIN, Roman, 59557 Lippstadt (DE); HOLBACH, Mirjam, 44329 Dortmund (DE); OLK, Joachim, 59555 Lippstadt (DE)
(74) Vertreter: Behr-Wenning, Gregor
(86) Internationale Anmeldenummer: PCT/EP2021/068348
(87) Internationale Veröffentlichungsnummer: WO 2022/189008

(56) Entgegenhaltungen:
- DE-A1- 102010 034 191
- US-A1- 2017 212 210

## Beschreibung

### Beschreibung

Die vorliegende Erfindung betrifft ein Verfahren zum Erkennen einer Veränderung eines Übertragungskanalsystems eines Fahrzeuges, ein Funkmodul sowie ein Funksystem.

Ultrabreitband (Ultra-wideband; UWB) ist eine Funktechnik, bei welcher ein Sendesignal mit geringer Leistung über einen großen Frequenzbereich gesendet wird, sodass belegte Frequenzbänder im Wesentlichen nicht gestört werden. Das Sendesignal umfasst hierfür Einzelimpulse. Je nach genutztem Modulationsverfahren können Amplitude, Polarität und Position der Einzelimpulse verändert werden.

In einem Fahrzeug, beispielsweise einem Automobil, kann eine Sendeeinheit zum Senden eines Sendesignals und eine Empfangseinheit zum Empfangen eines auf dem Sendesignal basierenden Empfangssignals angeordnet sein, wobei durch die Umgebung ein Übertragungskanal für das Übertragen des Sendesignals bestimmt ist. Durch eine Veränderung der Umgebung kann sich der Übertragungskanal verändern, wobei eine Änderung des Übertragungskanals durch ein Erkennen einer Veränderung der Kanalimpulsantwort des Übertragungskanals über die Zeit erfolgen kann. Eine Veränderung des Übertragungskanals kann beispielsweise durch ein Einsteigen einer Person in das Fahrzeug hervorgerufen werden. Jedoch stellt das Erkennen einer ("wirklichen") Veränderung des Übertragungskanals, beispielsweise hervorgerufen durch eine körperliche Veränderung in dem Fahrzeug, eine Herausforderung dar, da technische Komponenten wie z. B. die Sendeeinheit und/oder die Empfangseinheit technische Toleranzen bzw. Ungenauigkeiten aufweisen können. Diese technischen Toleranzen bzw. Ungenauigkeiten können dazu führen, dass nachteiligerweise eine Erkennungseinheit zum Erkennen der Veränderung des Übertragungskanalsystems keine "wirkliche" Veränderung des Übertragungskanals erkennt, sondern eine durch technische Toleranzen bzw. Ungenauigkeiten hervorgerufene "scheinbare" Veränderung des Übertragungskanals.

Beispielsweise kann ein Abtasten des Sendesignals und/oder des Empfangssignals für das Ermitteln einer Kanalimpulsantwort einer Abtastungenauigkeit unterliegen. Daher kann es zu Amplitudenschwankungen aufgrund nicht-identischer Abtastzeitpunkte für das Sendesignal und das Empfangssignal kommen. Nachteiligerweise ist somit ein Erkennen einer Veränderung der Kanalimpulsantwort, wobei die Veränderung der Kanalimpulsantwort im Wesentlichen auf einer "wirklichen" Veränderung des Übertragungskanals und nicht nur auf technischen Abtastungenauigkeiten basiert, erschwert.

Es ist Aufgabe der vorliegenden Erfindung, die voranstehend beschriebenen Nachteile zumindest teilweise zu beheben. Insbesondere ist es Aufgabe der vorliegenden Erfindung ein besonders einfaches und/oder genaues und/oder zuverlässiges Erkennen einer ("wirklichen") Veränderung eines Übertragungskanalsystems bzw. zumindest eines Übertragungskanals eines Übertragungskanalsystems darzulegen. Ferner ist es insbesondere Aufgabe der vorliegenden Erfindung, ein besonders einfaches und/oder kostengünstiges und/oder kompaktes Funkmodul bzw. Funksystem für ein Erkennen einer ("wirklichen") Veränderung eines Übertragungskanalsystems darzulegen.

Die Schrift US 2017/212210 A1 offenbart ein zeitumgekehrtes Positionierungssystem, um Kanalimpulsantworten mehrerer Empfangssignale in Koordinatenpositionen darzustellen. Die Schrift DE 10 2010 034191 A1 offenbart ein Verfahren zur frequenzabhängigen Dopplerverschiebung zwischen mindestens einem Funksender und mindestens einem Funkempfänger.

Die voranstehende Aufgabe wird gelöst durch ein Verfahren zum Erkennen einer Veränderung eines Übertragungskanalsystems mit den Merkmalen des Anspruchs 1 und einem Funkmodul mit den Merkmalen des Anspruchs 16 sowie einem Funksystem mit den Merkmalen des Anspruchs 17. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Funkmodul und/oder dem erfindungsgemäßen Funksystem und jeweils umgekehrt, sodass bezüglich der Offenbarung zu den einzelnen Erfindungsaspekten stets wechselseitig Bezug genommen wird bzw. werden kann.

Gemäß einem ersten Aspekt zeigt die vorliegende Erfindung ein Verfahren zum Erkennen einer Veränderung eines Übertragungskanalsystems eines Fahrzeuges mit zumindest einem Übertragungskanal. Das Verfahren weist als einen Schritt ein Senden eines Ultrabreitband-Sendesignals mittels einer Sendeeinheit über das Übertragungskanalsystem sowie als einen weiteren Schritt ein Empfangen wenigstens eines auf dem Ultrabreitband-Sendesignal basierenden Empfangssignals mittels einer Empfangseinheit sowie als einen weiteren Schritt ein Ermitteln wenigstens einer Kanalimpulsantwort des zumindest einen Übertragungskanals des Fahrzeuges basierend auf dem Empfangssignal mittels einer Ermittlungseinheit auf. Diese eben genannten Schritte werden mehrmalig wiederholt, um wenigstens eine Mehrzahl an Kanalimpulsantworten des zumindest einen Übertragungskanals zu ermitteln. Ein weiterer Schritt des erfindungsgemäßen Verfahrens ist ein jeweiliges Anpassen zumindest eines Teils der ermittelten Kanalimpulsantworten der Mehrzahl an Kanalimpulsantworten des zumindest einen Übertragungskanals an eine bekannte Kanalimpulsantwort des zumindest einen Übertragungskanals des Fahrzeuges zu einer jeweiligen angepassten Kanalimpulsantwort mittels einer Anpassungseinheit derart, dass sich ein aus der ermittelten Kanalimpulsantwort und der bekannten Kanalimpulsantwort ergebender Korrelationskoeffizient vergrößert. Das Verfahren umfasst ferner als einen weiteren Schritt ein Filtern zumindest eines Teils der angepassten Kanalimpulsantworten wenigstens des zumindest einen Übertragungskanals in einer Zeitrichtung mittels einer Filtereinheit zum Erhalten eines spezifischen Filtersignals der gefilterten, angepassten Kanalimpulsantworten des zumindest einen Übertragungskanals. Außerdem weist das erfindungsgemäße Verfahren als einen weiteren Schritt ein Erkennen der Veränderung des Übertragungskanalsystems wenigstens anhand des spezifischen Filtersignals des zumindest einen Übertragungskanals mittels einer Erkennungseinheit auf.

Die zuvor und die im Nachfolgenden beschrieben Verfahrensschritte können, sofern technisch sinnvoll, einzeln, zusammen, einfach, mehrfach, zeitlich parallel und/oder nacheinander in beliebiger Reihenfolge ausgeführt werden.

Das Fahrzeug ist insbesondere ein Kraftfahrzeug, vorzugsweise ein Personenkraftwagen oder ein Lastkraftwagen.

Die Veränderung des Übertragungskanalsystems ist insbesondere als eine Veränderung des Übertragungskanalsystems über die Zeit zu verstehen. Eine Veränderung des Übertragungskanalsystems ist insbesondere ein Erkennen einer Veränderung zumindest eines Übertragungskanals des Übertragungskanalsystems. Weist das Übertragungskanalsystem mehrere Übertragungskanäle auf, so ist auch denkbar, dass eine Veränderung des Übertragungskanalsystems insbesondere vorliegt, wenn für mehrere Übertragungskanäle, vorzugsweise für alle Übertragungskanäle, eine Veränderung des jeweiligen Übertragungskanals erkannt wurde. Somit kann ein Erkennen einer Veränderung des Übertragungskanalsystems besonders zuverlässig sein.

Das Erkennen der Veränderung des Übertragungskanalsystems des Fahrzeuges ist insbesondere für ein Überwachen des Fahrzeuges. Mit anderen Worten kann das Erkennen der Veränderung des Übertragungskanalsystems des Fahrzeuges für ein Überwachen des Fahrzeuges verwendet werden. Ein erfindungsgemäßes Verfahren zum Erkennen der Veränderung des Übertragungskanalsystems des Fahrzeuges mit dem zumindest einen Übertragungskanal für ein Überwachen des Fahrzeuges kann als einen zusätzlichen (Aktivierungs-)Schritt ein Verschließen, insbesondere Verriegeln, des Fahrzeuges aufweisen. Das Überwachen des Fahrzeuges ist vorzugsweise eine Innenraum- und/oder Außenraumüberwachung des Fahrzeugs. Beispielsweise kann durch die Überwachung, insbesondere Innenraumüberwachung, ein Diebstahlschutz gewährleistet werden. Ferner kann das Überwachen des Fahrzeuges auch zum Erkennen einer Belegung zumindest eines Sitzplatzes oder mehrerer Sitzplätze des Fahrzeuges sein bzw. verwendet werden. Ein erfindungsgemäßes Verfahren zum Erkennen der Veränderung des Übertragungskanalsystems des Fahrzeuges mit dem zumindest einen Übertragungskanal zum Erkennen einer Belegung zumindest eines Sitzplatzes kann als einen zusätzlichen (Aktivierungs-)Schritt beispielsweise ein Entriegeln des Fahrzeuges und/oder ein Starten einer Antriebsmaschine zum Fortbewegen des Fahrzeuges aufweisen. Es ist auch denkbar, dass das Überwachen des Fahrzeuges zum Erkennen von zumindest einem Kind oder mehreren Kindern in dem Fahrzeug ist bzw. verwendet wird (Child Presence Detection).

Ferner kann das Erkennen der Veränderung des Übertragungskanalsystems des Fahrzeuges insbesondere für ein Überwachen eines Gesundheitszustandes, insbesondere einer Atmung, von zumindest einem Lebewesen in dem Fahrzeug sein bzw. verwendet werden.

Insbesondere bildet sich ein Übertragungskanal des Übertragungskanalsystems in Bezug auf eine Sendeinheit und auf eine Empfangseinheit durch eine äußere und/oder innere Umgebung des Fahrzeuges aus. Die Kanalimpulsantwort ("Channel Impulse Response"; CIR) kann eine vollständige Information über den Einfluss des Übertragungskanals auf das Ultrabreitband-Sendesignal liefern.

Es ist weiter denkbar, dass das Übertragungskanalsystem mehrere Übertragungskanäle aufweist. Somit kann ein Bereich eines Fahrzeugs, der für eine Sendeeinheit - Empfangseinheit Kombination "verdeckt" ist, mittels einer anderen Sendeeinheit - Empfangseinheit Kombination "sichtbar" gemacht werden. Beispielsweise kann ein Fahrzeug mehrere Sendeeinheiten und eine Empfangseinheit aufweisen oder das Fahrzeug umfasst eine Sendeeinheit und mehrere Empfangseinheiten zum Ausbilden mehrerer Übertragungskanäle. Insbesondere kann das Fahrzeug auch mehrere Sendeeinheiten und mehrere Empfangseinheiten aufweisen, um mehrere Übertragungskanäle auszubilden. Somit kann das Erkennen einer Veränderung des Übertragungskanalsystems besonders zuverlässig sein.

Das Ermitteln einer Kanalimpulsantwort eines Übertragungskanals des Übertragungskanalsystems des Fahrzeuges erfolgt vorzugsweise durch ein Korrelieren, insbesondere Kreuzkorrelieren, des Empfangssignals mit dem Ultrabreitband-Sendesignal. Beispielsweise kann das Ultrabreitband-Sendesignal für das Korrelieren, insbesondere das Kreuzkorrelieren, zum Ermitteln der Kanalimpulsantwort in einem Speicher eines erfindungsgemäßen Funkmoduls bzw. eines erfindungsgemäßen Funksystems hinterlegt sein. Vorteilhafterweise kann somit das Ermitteln der Kanalimpulsantwort des Übertragungskanals besonders einfach erfolgen. Vorteilhafterweise kann eine durch das Kreuzkorrelieren des Empfangssignals mit dem Ultrabreitband-Sendesignal gewonnene Kreuzkorrelationsfunktion die Kanalimpulsantwort des Übertragungskanals darstellen. Ferner ist die Kanalimpulsantwort insbesondere eine Funktion einer Zeit, insbesondere einer Verzögerungszeit. Anhand der Kanalimpulsantwort kann eine mögliche Mehrwegeausbreitung des Ultrabreitband-Sendesignals erkannt werden, wobei das Erkennen einer möglichen Mehrwegausbreitung insbesondere auch von der Verzögerungszeit abhängt, wie lange eine Kanalimpulsantwort gemessen wird (zeitliche Länge des Sendesignals).

Der sich aus der ermittelten Kanalimpulsantwort und der bekannten Kanalimpulsantwort ergebende Korrelationskoeffizient spiegelt insbesondere die Ähnlichkeit der ermittelten Kanalimpulsantwort zur bekannten Kanalimpulsantwort wider. Der Korrelationskoeffizient ist insbesondere ein Kreuzkorrelationskoeffizient einer durch das Kreuzkorrelieren der ermittelten Kanalimpulsantwort mit der bekannten Kanalimpulsantwort gewonnenen Kreuzkorrelationsfunktion, ganz vorzugsweise ein maximaler Kreuzkorrelationskoeffizient einer durch das Kreuzkorrelieren der ermittelten Kanalimpulsantwort mit der bekannten Kanalimpulsantwort gewonnenen Kreuzkorrelationsfunktion.

Da das Ultrabreitband-Sendesignal mittels der Sendeeinheit über einen Übertragungskanal gesendet wird, kann sich das Ultrabreitband-Sendesignal aufgrund des Übertragungskanals verändern, sodass das von der Sendeeinheit ausgesendete Ultrabreitband-Sendesignal und das von der Empfangseinheit empfangene Empfangssignal sich unterscheiden können. Daher wird in dieser Schrift bevorzugterweise von Kreuzkorrelieren und/oder Kreuzkorrelation und/oder Kreuzkorrelationskoeffizient anstatt von Autokorrelieren bzw. Autokorrelation bzw. Autokorrelationskoeffizient gesprochen. Ist jedoch auch zu erwähnen, dass insbesondere unter besonderen Verhältnissen das Kreuzkorrelieren als Autokorrelieren und/oder dass der Kreuzkorrelationskoeffizient als Autokorrelationskoeffizient und/oder dass die Kreuzkorrelationsfunktion als Autokorrelationsfunktion verstanden werden kann.

Das jeweilige Anpassen der ermittelten Kanalimpulsantworten an eine bekannte Kanalimpulsantwort des Fahrzeuges zu einer jeweiligen angepassten Kanalimpulsantwort kann insbesondere als ein Bilden einer jeweiligen angepassten Kanalimpulsantwort durch ein Anpassen einer ermittelten Kanalimpulsantwort an eine bekannte Kanalimpulsantwort des Fahrzeuges verstanden werden. Mit anderen Worten ausgedrückt, wird insbesondere jeweils eine ermittelte Kanalimpulsantwort, beispielsweise eine durch ein Korrelieren des Empfangssignals mit dem Ultrabreitband-Sendesignal ermittelte Kanalimpulsantwort, an eine bekannte Kanalimpulsantwort des Fahrzeuges, beispielsweise eine zeitlich davor ermittelte Kanalimpulsantwort, angepasst bzw. angeglichen und dadurch die jeweilige angepasste Kanalimpulsantwort erhalten.

Durch das Filtern zumindest eines Teils der angepassten Kanalimpulsantworten wenigstens des zumindest einen Übertragungskanals in einer Zeitrichtung kann eine zeitliche Veränderung der Kanalimpulsantwort erkennbar gemacht werden.

Insbesondere wird durch das jeweiliges Anpassen zumindest eines Teils der ermittelten Kanalimpulsantworten der Mehrzahl an Kanalimpulsantworten des zumindest einen Übertragungskanals an eine bekannte Kanalimpulsantwort des zumindest einen Übertragungskanals des Fahrzeuges zu einer jeweiligen angepassten Kanalimpulsantwort mittels einer Anpassungseinheit derart, dass sich ein aus der ermittelten Kanalimpulsantwort und der bekannten Kanalimpulsantwort ergebender Korrelationskoeffizient vergrößert, die Ähnlichkeit der ermittelten Kanalimpulsantwort und der bekannten Kanalimpulsantwort vergrößert. Vorteilhafterweise können somit technische Toleranzen und/oder technische Ungenauigkeiten, z. B. des Funkmoduls bzw. des Funksystems, zumindest teilweise zum Erkennen einer "wirklichen" Veränderung des Übertragungskanalsystems des Fahrzeuges verbessert berücksichtigt werden. Beispielsweise können Abtastungenauigkeiten als technische Ungenauigkeiten verbessert berücksichtigt werden. Somit kann eine "ruhige" zeitliche Folge an mehreren Kanalimpulsantworten erzeugt werden. Insbesondere an zumindest einer charakteristischen Stelle oder mehreren charakteristischen Stellen der Kanalimpulsantwort bzw. der Kanalimpulsantworten kann eine Veränderung eines Übertragungskanals über die Zeit erkennbar werden. Eine charakteristische Stelle der Kanalimpulsantwort kann ein lokales Maximum der Kanalimpulsantwort sein. Insbesondere weisen lokale Maxima auf zeitverzögerte Echos und/oder Reflektoren des Übertragungskanals hin. Folglich kann auf besonders einfache, genaue sowie zuverlässige Weise eine "wirkliche" Veränderung zumindest eines Übertragungskanals eines Übertragungskanalsystems von einer auf technischen Toleranzen und/oder Ungenauigkeiten beruhenden, "scheinbaren" Veränderung des Übertragungskanals verbessert erkannt werden. Somit kann vorteilhafterweise bereits eine kleine Änderung eines Übertragungskanals erkannt werden. Somit kann ein Überwachen des Fahrzeuges besonders genau erfolgen.

Bei dem Ausdruck "Veränderung des Übertragungskanalsystems", "Veränderung des Übertragungskanals", "Erkennen einer Veränderung des Übertragungskanalsystems", "Erkennen einer Veränderung des Übertragungskanals" oder dergleichen kann im Regelfall davon ausgegangen werden, dass eine "wirkliche" Veränderung gemeint ist bzw. der Ausdruck sich auf eine "wirkliche" Veränderung bezieht. Sofern hilfreich für das Verständnis oder zu Betonungszwecken wird teilweise das Wort "wirklich" oder "scheinbar" ergänzt.

Es kann von Vorteil sein, wenn bei einem erfindungsgemäßen Verfahren zum Erkennen der Veränderung des Übertragungskanalsystems anhand wenigstens des spezifischen Filtersignals des zumindest einen Übertragungskanals das spezifische Filtersignal des zumindest einen Übertragungskanals mit einem vorgegebenen Signal für den zumindest einen Übertragungskanal verglichen wird. Somit kann besonders einfach, genau und zuverlässig eine Veränderung des Übertragungskanals des Übertragungskanalsystems erkannt werden. Das vorgegebene Signal kann insbesondere ein vorgegebenes, dynamisches Signal sein. Das vorgegebene, dynamische Signal kann sich im Laufe der Zeit verändern bzw. neu bestimmt werden. Insbesondere kann das Neubestimmen durch eine Aktion ausgelöst werden. Soll beispielsweise ein Fahrzeug überwacht werden, so kann mit einem jeweiligen Verschließen, insbesondere Verriegeln, des Fahrzeuges als eine Aktion eine Neubestimmung des vorgegebenen Signals ausgelöst werden. Vorteilhafterweise kann somit eine sich geänderte Umgebung wie beispielsweise eine sich geänderte Innenraumumgebung des Fahrzeugs berücksichtigt werden. Eine Innenraumumgebung kann sich beispielsweise durch abgestellte Gegenstände des Fahrers des Fahrzeuges ändern.

Vorteilhafterweise kann bei einem erfindungsgemäßen Verfahren zum Erkennen der Veränderung des Übertragungskanalsystems wenigstens anhand des spezifischen Filtersignals des zumindest einen Übertragungskanals ein Mittelwert aus zumindest einem Teil des spezifischen Filtersignals des zumindest einen Übertragungskanals gebildet werden, wobei der gebildete Mittelwert mit einem Schwellwert verglichen wird. Somit kann besonders zuverlässig eine Veränderung des Übertragungskanals des Übertragungskanalsystems erkannt werden. Insbesondere kann der Schwellwert zumindest ein Mehrfaches eines auf den ermittelten Kanalimpulsantworten basierenden Rauschwertes sein. Der Schwellwert ist ferner insbesondere ein dynamischer Schwellwert. Der dynamische Schwellwert kann sich im Laufe der Zeit verändern bzw. neu bestimmt werden. Soll beispielsweise ein Fahrzeug überwacht werden, so kann mit einem jeweiligen Verschließen, insbesondere Verriegeln, des Fahrzeuges eine Neubestimmung des Schwellwerts ausgelöst werden. Vorteilhafterweise kann somit eine sich geänderte Umgebung wie beispielsweise eine sich geänderte Innenraumumgebung des Fahrzeugs berücksichtigt werden. Ferner wird der zumindest eine Teil des spezifischen Filtersignals des zumindest einen Übertragungskanals insbesondere zumindest zeitweise zwischengespeichert, um den Mittelwert aus dem zwischengespeicherten Filtersignal berechnen zu können. Das Funksystem, insbesondere das Funkmodul, kann zum Zwischenspeichern insbesondere einen Puffer aufweisen. Weiter ist vorzugsweise das Bilden des Mittelwerts aus zumindest einem Teil des spezifischen Filtersignals des zumindest einen Übertragungskanals ein dynamisches Bilden des Mittelwerts. Das dynamische Bilden des Mittelwerts aus dem zumindest einem Teil des spezifischen Filtersignals kann nach dem "Schiebefenster" - Prinzip ("sliding window principle") erfolgen. Hierbei wird, beispielsweise in einem Puffer des Funksystems, insbesondere die zeitlich älteste Information des spezifischen Filtersignals der gefilterten, angepassten Kanalimpulsantworten durch eine zeitlich neu erhaltene Information des spezifischen Filtersignals der gefilterten, angepassten Kanalimpulsantworten ersetzt. Somit kann besonders zuverlässig eine Veränderung des Übertragungskanals des Übertragungskanalsystems erkannt werden. Ferner ist insbesondere denkbar, dass zum Erkennen der Veränderung des Übertragungskanalsystems ein erster Mittelwert für einen ersten Zeitabschnitt aus dem zumindest einen Teil des spezifischen Filtersignals des zumindest einen Übertragungskanals, insbesondere in Zeitrichtung, dynamisch gebildet wird sowie, dass ein zweiter Mittelwert für einen zweiten Zeitabschnitt aus dem zumindest einen Teil des spezifischen Filtersignals des zumindest einen Übertragungskanals, insbesondere in Zeitrichtung, dynamisch gebildet wird, wobei der erste Mittelwert und der zweite Mittelwert zu einem dynamischen Ersatz-Wert miteinander verrechnet werden, und wobei der Ersatz-Wert mit dem Schwellwert, insbesondere einem dynamischen Schwellwert, verglichen wird. Ein Zeitabschnitt ist insbesondere als Zeitdauer in Zeitrichtung zu verstehen. Insbesondere ist der erste Zeitabschnitt zeitlich länger als der zweite Zeitabschnitt, wobei insbesondere der erste Zeitabschnitt und der zweite Zeitabschnitt sich überlappen. Somit ändert sich vorteilhafterweise der erste Mittelwert über die Zeit langsamer als der zweite Mittelwert. Der erste Mittelwert kann somit eine Baseline darstellen und als Tiefpassfilter dienen. Vorzugsweise werden der erste Mittelwert und der zweite Mittelwert voneinander subtrahiert und ein dynamischer Absolutwert gebildet, wobei der gebildete Absolutwert mit dem Schwellwert verglichen wird, um eine Veränderung des Übertragungskanalsystems zu erkennen. Somit kann auf einfache Weise ein Gleichanteil eliminiert werden. Ferner können somit Langzeitdrifts berücksichtigt werden, sodass insbesondere auch ein fester Schwellwert verwendet werden kann. Somit kann beispielsweise ein Überwachen eines Gesundheitszustandes, insbesondere einer Atmung, von zumindest einem Lebewesen in dem Fahrzeug besonders vorteilhaft erfolgen. Beispielsweise kann das Atmen eines Lebewesens intrinsisch zu einem sich periodisch oder im Wesentlichen periodisch ändernden Übertragungskanal führen, wobei ein gebildeter erster Mittelwert für einen ersten Zeitabschnitt aus dem spezifischen Filtersignals dieses Übertragungskanals insbesondere eine Baseline darstellt. Anschließend werden der erste Mittelwert und ein zweiter Mittelwert voneinander subtrahiert und ein dynamischer Absolutwert gebildet, wobei der gebildete Absolutwert mit dem Schwellwert verglichen wird. Eine nun auftretende ("zusätzliche") Veränderung in dem sich periodisch ändernden oder im Wesentlichen periodisch ändernden Übertragungskanal wirkt sich auf den ersten Mittelwert mit dem zeitlich längeren Zeitabschnitt weniger stark als auf den zweiten Mittelwert mit dem zeitlich kürzeren Zeitabschnitt aus. Somit kann eine Überwachung eines Gesundheitszustandes, insbesondere einer Atmung, eines Lebewesens besonders vorteilhaft erfolgen.

Mit besonderem Vorteil kann bei einem erfindungsgemäßen Verfahren für das jeweilige Anpassen des zumindest einen Teils der ermittelten Kanalimpulsantworten an die bekannte Kanalimpulsantwort des zumindest einen Übertragungskanals zum Vergrößern des Korrelationskoeffizienten die ermittelte Kanalimpulsantwort zu der bekannten Kanalimpulsantwort des Übertragungskanals verschoben werden. Vorteilhafterweise können somit technische Toleranzen und/oder technische Ungenauigkeiten, beispielsweise technische Ungenauigkeiten einer Abtastung des Empfangssignals, berücksichtigt werden, sodass auf besonders zuverlässige Weise eine "wirkliche" Veränderung eines Übertragungskanals erkannt werden kann. Das Verschieben ist vorzugsweise zumindest ein 1-dimensionales Verschieben. Das Verschieben kann auch ein mehrdimensionales Verschieben sein. Das (1-dimensionale) Verschieben ist insbesondere ein Verschieben der ermittelten Kanalimpulsantwort zu der bekannten Kanalimpulsantwort in einer Verzögerungszeitrichtung. Vorteilhafterweise können somit technische Ungenauigkeiten, beispielsweise technische Ungenauigkeiten einer Abtastung des Empfangssignals, besonders vorteilhaft berücksichtigt werden. Somit kann eine "ruhige" zeitliche Folge an mehreren Kanalimpulsantworten erzeugt werden, wobei insbesondere die mehreren Kanalimpulsantworten an zumindest einer charakteristischen Stelle oder mehreren charakteristischen Stellen besonders vorteilhaft zueinander ausgerichtet sind. Insbesondere wird die ermittelte Kanalimpulsantwort zu der bekannten Kanalimpulsantwort des Übertragungskanals insbesondere derart verschoben, dass sich die Ähnlichkeit der ermittelten Kanalimpulsantwort und der bekannten Kanalimpulsantwort vergrößert. Ganz vorzugsweise wird die ermittelte Kanalimpulsantwort zu der bekannten Kanalimpulsantwort des Übertragungskanals derart in einer Verzögerungszeitrichtung verschoben, dass eine Kreuzkorrelation einen vergrößerten Wert, insbesondere den maximalen Wert, hat. Ferner kann das Verschieben der ermittelten Kanalimpulsantwort zu der bekannten Kanalimpulsantwort des Übertragungskanals ein relatives Verschieben zueinander sein.

Nach einer weiteren bevorzugten Ausführungsform kann bei einem erfindungsgemäßen Verfahren für das jeweilige Anpassen des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort in Bezug auf die bekannte Kanalimpulsantwort des Übertragungskanals skaliert werden. Vorteilhafterweise können somit technische Toleranzen und/oder technische Ungenauigkeiten, beispielsweise technische Ungenauigkeiten einer Abtastung des Empfangssignals, berücksichtigt werden, sodass auf besonders zuverlässige Weise eine "wirkliche" Veränderung eines Übertragungskanals erkannt werden kann. Insbesondere können Amplitudenschwankungen von Kanalimpulsantworten, welche durch nicht identische Abtastzeitpunkte für das Ultrabreitband-Sendesignal und das Empfangssignal bedingt sind, verbessert kompensiert werden. Insbesondere wird eine charakteristische Stelle der ermittelten Kanalimpulsantwort in Bezug auf eine korrespondierende charakteristische Stelle der bekannten Kanalimpulsantwort des Übertragungskanals skaliert, insbesondere normiert. Vorzugsweise wird eine Amplitude der ermittelten Kanalimpulsantwort als charakteristische Stelle in Bezug auf eine Amplitude der bekannten Kanalimpulsantwort als korrespondierende charakteristische Stelle skaliert, insbesondere normiert.

Es kann von Vorteil sein, wenn bei einem erfindungsgemäßen Verfahren für das jeweilige Anpassen des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort interpoliert wird, um zumindest eine Hilfsstützstelle zwischen zwei Stützstellen der ermittelten Kanalimpulsantwort hinzuzufügen. Vorteilhafterweise kann somit eine zeitliche Auflösung der ermittelten Kanalimpulsantwort erhöht werden, sodass eine "wirkliche" Veränderung eines Übertragungskanals verbessert erkannt werden kann. Insbesondere ist eine ermittelte Kanalimpulsantwort ein zeitdiskretes Signal bzw. eine zeitdiskrete Funktion mit mehreren Stützstellen. Die zeitliche Auflösung der Kanalimpulsantwort kann durch technische Grenzen, beispielsweise der Abtastfrequenz, limitiert sein. Durch das Interpolieren der ermittelten Kanalimpulsantwort können mehrere zusätzliche Hilfsstützstellen zwischen den mehreren Stützstellen der ermittelten Kanalimpulsantwort hinzugefügt werden. Einerseits kann somit der Verlauf der Kanalimpulsantwort über die Verzögerungszeit geglättet werden, und damit der sich aus der ermittelten Kanalimpulsantwort und der bekannten Kanalimpulsantwort ergebende Korrelationskoeffizient vergrößert werden. Andererseits kann vorteilhafterweise zusätzlich ein Verschieben der ermittelten Kanalimpulsantwort zu der bekannten Kanalimpulsantwort in kleineren (Zeit-)Schritten verbessert erfolgen. Somit kann die ermittelte Kanalimpulsantwort zu der bekannten Kanalimpulsantwort des Übertragungskanals insbesondere derart verbessert verschoben werden, dass sich die Ähnlichkeit der ermittelten Kanalimpulsantwort und der bekannten Kanalimpulsantwort vergrößert. Ganz vorzugsweise wird die ermittelte Kanalimpulsantwort zu der bekannten Kanalimpulsantwort des Übertragungskanals derart in einer Verzögerungszeitrichtung verschoben, dass eine Kreuzkorrelation einen vergrößerten Wert, insbesondere den maximalen Wert, hat. Vorzugsweise wird jeweils zwischen zwei Stützstellen, insbesondere jeweils zwischen zwei benachbarten Stützstellen, der mehreren Stützstellen der ermittelten Kanalimpulsantwort jeweils ein Polynom eingesetzt, zum Hinzufügen zumindest einer Hilfsstützstelle zwischen den zwei Stützstellen, insbesondere zwischen zwei benachbarten Stützstellen. Das Polynom ist vorzugsweise ein Polynom dritter Ordnung. Basiert die bekannte Kanalimpulsantwort auf einer zeitlich vorher ermittelten Kanalimpulsantwort des zumindest einen Übertragungskanals, so wird die ermittelte Kanalimpulsantwort insbesondere gleich oder im Wesentlichen gleich wie die bekannte Kanalimpulsantwort interpoliert. Die ermittelte Kanalimpulsantwort und die bekannte Kanalimpulsantwort können somit die gleiche oder im Wesentlichen die gleiche Zeitauflösung in der Verzögerungszeitrichtung aufweisen. Somit kann das Verschieben besonders einfach sein.

Vorteilhafterweise kann bei einem erfindungsgemäßen Verfahren zumindest ein Teil der ermittelten Kanalimpulsantworten der Mehrzahl an Kanalimpulsantworten des zumindest einen Übertragungskanals jeweils an eine auf einer zeitlich vorher ermittelten Kanalimpulsantwort basierenden Kanalimpulsantwort des zumindest einen Übertragungskanals angepasst werden. Somit kann besonders einfach und zuverlässig eine Veränderung des Übertragungskanals des Übertragungskanalsystems erkannt werden. Die auf einer zeitlich vorher ermittelten Kanalimpulsantwort basierende Kanalimpulsantwort ist insbesondere als die bekannte Kanalimpulsantwort des zumindest einen Übertragungskanals zu verstehen, an welche eine ermittelte Kanalimpulsantwort erfindungsgemäß angepasst wird. Insbesondere kann eine jeweilige bekannte Kanalimpulsantwort, an welche eine jeweilige ermittelte Kanalimpulsantwort angepasst wird, eine dynamische Kanalimpulsantwort sein. Die zeitlich vorher ermittelte Kanalimpulsantwort kann beispielsweise jeweils die zeitlich direkt vor der jeweiligen ermittelten Kanalimpulsantwort ermittelte Kanalimpulsantwort sein.

Mit besonderem Vorteil kann bei einem erfindungsgemäßen Verfahren zumindest ein Teil der ermittelten Kanalimpulsantworten der Mehrzahl an Kanalimpulsantworten des zumindest einen Übertragungskanals an dieselbe bekannte Kanalimpulsantwort des zumindest einen Übertragungskanals angepasst werden. Vorteilhafterweise kann somit auf besonders einfache und schnelle Weise eine "wirkliche" Veränderung eines Übertragungskanals erkannt werden. Insbesondere kann dieselbe bekannte Kanalimpulsantwort des zumindest einen Übertragungskanals eine auf zumindest einer zeitlich vorher ermittelten Kanalimpulsantwort basierenden Kanalimpulsantwort sein. Ferner kann insbesondere dieselbe bekannte Kanalimpulsantwort dynamisch sein. Mit anderen Worten, kann sich dieselbe bekannte Kanalimpulsantwort im Laufe der Zeit verändern bzw. neu festgelegt werden, beispielsweise kann dieselbe bekannte Kanalimpulsantwort nach einer festlegbaren Anzahl an Kanalimpulsantworten neu festgelegt werden. Soll beispielsweise ein Fahrzeug überwacht werden, so kann mit einem jeweiligen Verschließen, insbesondere Verriegeln, des Fahrzeuges dieselbe bekannte Kanalimpulsantwort neu festgelegt werden.

Nach einer weiteren bevorzugten Ausführungsform kann bei einem erfindungsgemäßen Verfahren eine ermittelte Kanalimpulsantwort der Mehrzahl an Kanalimpulsantworten des zumindest einen Übertragungskanals an die bekannte Kanalimpulsantwort des zumindest einen Übertragungskanals der jeweiligen angepassten Kanalimpulsantwort derart angepasst werden, dass sich der aus der ermittelten Kanalimpulsantwort und der bekannten Kanalimpulsantwort ergebende Korrelationskoeffizient maximiert. Somit kann eine Veränderung eines Übertragungskanalsystems bzw. zumindest eines Übertragungskanals des Übertragungskanalsystems besonders genau und zuverlässig erkannt werden. Insbesondere wird eine ermittelte Kanalimpulsantwort der Mehrzahl an Kanalimpulsantworten des zumindest einen Übertragungskanals an die bekannte Kanalimpulsantwort des zumindest einen Übertragungskanals der jeweiligen angepassten Kanalimpulsantwort derart angepasst, dass ein Kreuzkorrelationskoeffizient einer durch ein Kreuzkorrelieren der ermittelten Kanalimpulsantwort mit der bekannten Kanalimpulsantwort gewonnenen Kreuzkorrelationsfunktion maximiert oder im Wesentlichen maximiert ist. Das Anpassen einer ermittelten Kanalimpulsantwort an die bekannte Kanalimpulsantwort kann insbesondere ein Verschieben der ermittelten Kanalimpulsantwort in einer Verzögerungszeitrichtung und/oder ein Skalieren der ermittelten Kanalimpulsantwort, insbesondere in Amplitudenrichtung der Kanalimpulsantwort, und/oder ein Interpolieren der ermittelten Kanalimpulsantwort sein. Somit kann eine Veränderung eines Übertragungskanalsystems bzw. zumindest eines Übertragungskanals des Übertragungskanalsystems ganz besonders genau und ganz besonders zuverlässig erkannt werden.

Es kann von Vorteil sein, wenn bei einem erfindungsgemäßen Verfahren das Filtern zumindest eines Teils der angepassten Kanalimpulsantworten des zumindest einen Übertragungskanals in der Zeitrichtung mittels einem Hochpassfilter erfolgt. Vorteilhafterweise kann somit ein Gleichanteil der angepassten Kanalimpulsantworten in Zeitrichtung herausgefiltert werden und eine Änderung des zumindest einen Übertragungskanals besonders einfach erkannt werden. Insbesondere erfolgt das Hochpassfiltern des zumindest einen Teils der angepassten Kanalimpulsantworten in der Zeitrichtung jeweils für korrespondierende Stützstellen bzw. Hilfsstützstellen der Kanalimpulsantworten.

Vorteilhafterweise kann bei einem erfindungsgemäßen Verfahren das Ultrabreitband-Sendesignal zumindest ein Sounding-Signal, vorzugsweise zumindest zwei unterschiedliche Sounding-Signale aufweisen. Somit kann eine besonders vorteilhafte Kanalimpulsantwort ermittelt werden und eine Veränderung eines Übertragungskanalsystems bzw. zumindest eines Übertragungskanals des Übertragungskanalsystems besonders zuverlässig erkannt werden. Ein Sounding-Signal ist insbesondere ein bestimmtes komprimiertes, periodisches Pulssignal, das besonders vorteilhafte Kreuzkorrelationseigenschaften aufweist. Das zumindest eine Sounding-Signal ist vorzugsweise eine Ipatov-Sequenz. Vorteilhafterweise kann durch ein Kreuzkorrelieren einer Ipatov-Sequenz als Ultrabreitband-Sendesignal mit derselben Ipatov-Sequenz besonders exakt die Kanalimpulsantwort des zumindest einen Übertragungskanals ermittelt werden. Ferner ist denkbar, dass das Ultrabreitband-Sendesignal mehrere Sounding-Signale aufweist, insbesondere mehrere unterschiedliche Sounding-Signale, vorzugsweise mehrere unterschiedliche Ipatov-Sequenzen. Die mehreren Sounding-Signale werden insbesondere abwechselnd zeitlich nacheinander gesendet, wobei basierend auf den mehreren Sounding-Signalen die Kanalimpulsantworten in erfindungsgemäßer Weise ermittelt und/oder angepasst und/oder gefiltert werden. Somit kann eine Veränderung eines Übertragungskanalsystems bzw. zumindest eines Übertragungskanals des Übertragungskanalsystems besonders zuverlässig erkannt werden.

Nach einer weiteren bevorzugten Ausführungsform können bei einem erfindungsgemäßen Verfahren zeitlich vor dem Filtern mehrere angepasste Kanalimpulsantworten des zumindest einen Übertragungskanals des Fahrzeuges zu einer Ersatz-Kanalimpulsantwort miteinander verrechnet, insbesondere gemittelt, werden. Vorteilhafterweise können somit technische Toleranzen und/oder technische Ungenauigkeiten, beispielsweise technische Ungenauigkeiten einer Abtastung des Empfangssignals, verbessert berücksichtigt werden, sodass auf besonders zuverlässige Weise eine "wirkliche" Veränderung eines Übertragungskanals erkannt werden kann. Insbesondere können mehrere angepasste, zeitlich aufeinanderfolgende Kanalimpulsantworten des zumindest einen Übertragungskanals des Fahrzeuges zu der Ersatz-Kanalimpulsantwort miteinander verrechnet, insbesondere gemittelt, werden. Mit anderen Worten können mehrere angepasste Kanalimpulsantworten in Zeitrichtung zu der Ersatz-Kanalimpulsantwort miteinander verrechnet werden. Wenn das Ultrabreitband-Sendesignal mehrere unterschiedliche Sounding-Signale aufweist, so ist es insbesondere auch denkbar, dass darauf basierende, angepasste, zeitlich aufeinanderfolgende Kanalimpulsantworten des zumindest einen Übertragungskanals des Fahrzeuges zu der Ersatz-Kanalimpulsantwort miteinander verrechnet, insbesondere gemittelt, werden. Insbesondere ist es auch denkbar, dass mehrere angepasste Kanalimpulsantworten in der Verzögerungszeit zu der Ersatz-Kanalimpulsantwort miteinander verrechnet werden.

Es kann von Vorteil sein, wenn bei einem erfindungsgemäßen Verfahren mehrere Empfangseinheiten basierend auf dem gesendeten Ultrabreitband-Sendesignal jeweils ein Empfangssignal empfangen, um die Veränderung des Übertragungskanalsystems des Fahrzeuges zu erkennen. Somit kann ein Bereich eines Fahrzeugs, der für eine Sendeeinheit - Empfangseinheit Kombination "verdeckt" ist, mittels einer anderen Sendeeinheit - Empfangseinheit Kombination "sichtbar" gemacht werden, sodass das Erkennen einer Veränderung des Übertragungskanalsystems besonders zuverlässig ist. Die mehreren Empfangseinheiten sind insbesondere örtlich voneinander getrennt angeordnet, insbesondere örtlich voneinander getrennt in und/oder am Fahrzeug angeordnet. Basierend auf dem jeweiligen Empfangssignal der mehreren Empfangseinheiten können Kanalimpulsantworten des jeweiligen Übertragungskanals des Fahrzeuges ermittelt werden. Auf erfindungsgemäße Weise können die jeweils ermittelten Kanalimpulsantworten angepasst und/oder gefiltert werden, um eine Veränderung des Übertragungskanalsystems anhand eines spezifischen Filtersignals eines jeweiligen Übertragungskanals zu erkennen. Eine Veränderung des Übertragungskanalsystems liegt insbesondere bereits beim Erkennen einer Veränderung zumindest eines Übertragungskanals des Übertragungskanalsystems vor. Ferner können insbesondere die zumindest eine Sendeeinheit zum Senden des Ultrabreitband-Sendesignals und eine Empfangseinheit zum Empfangen des auf dem Ultrabreitband-Sendesignals basierenden Empfangssignals ein Modul ausbilden, insbesondere ein Funkmodul mitausbilden.

Vorteilhafterweise können bei einem erfindungsgemäßen Verfahren mehrere Sendeeinheiten jeweils ein Ultrabreitband-Sendesignal senden, um die Veränderung des Übertragungskanalsystems des Fahrzeuges zu erkennen. Somit kann ein Bereich eines Fahrzeugs, der für eine Sendeeinheit - Empfangseinheit Kombination "verdeckt" ist, mittels einer anderen Sendeeinheit - Empfangseinheit Kombination "sichtbar" gemacht werden, sodass das Erkennen einer Veränderung des Übertragungskanalsystems besonders zuverlässig ist. Die mehreren Sendeeinheiten sind insbesondere örtlich voneinander getrennt angeordnet, insbesondere örtlich voneinander getrennt in und/oder am Fahrzeug angeordnet.

Mit besonderem Vorteil kann bei einem erfindungsgemäßen Verfahren das Senden der Ultrabreitband-Sendesignale mittels der mehreren Sendeeinheiten zeitversetzt erfolgen. Somit kann das Erkennen einer Veränderung des Übertragungskanalsystems besonders zuverlässig sein. Vorzugsweise bilden hierfür jeweils eine Sendeeinheit zum Senden des Ultrabreitband-Sendesignals und eine Empfangseinheit zum Empfangen des auf dem Ultrabreitband-Sendesignals basierenden Empfangssignals ein Modul aus. Somit können die Module nacheinander die Funktion des Senders übernehmen, wobei die nicht-sendenden Module jeweils die Funktion des Empfängers übernehmen. Somit kann eine Mehrzahl an Übertragungskanälen erzeugt werden und ein Erkennen der Veränderung des Übertragungskanalsystems besonders vorteilhaft erfolgen.

Gemäß einem zweiten Aspekt zeigt die vorliegende Erfindung ein Funkmodul für ein Funksystem zum Erkennen einer Veränderung eines Übertragungskanalsystems eines Fahrzeuges mit zumindest einem Übertragungskanal, wobei das Funkmodul zumindest eine Empfangseinheit zum Empfangen eines auf dem Ultrabreitband-Sendesignals basierenden Empfangssignals aufweist. Ferner umfasst das Funkmodul eine Ermittlungseinheit zum Ermitteln zumindest einer Kanalimpulsantwort zumindest eines Übertragungskanals des Fahrzeuges basierend auf dem Empfangssignal, sowie eine Anpassungseinheit zum Anpassen zumindest einer ermittelten Kanalimpulsantwort einer Mehrzahl an Kanalimpulsantworten an eine bekannte Kanalimpulsantwort des zumindest einen Übertragungskanals des Fahrzeuges zu einer jeweiligen angepassten Kanalimpulsantwort derart, dass ein sich aus der ermittelten Kanalimpulsantwort und der bekannten Kanalimpulsantwort ergebender Korrelationskoeffizient vergrößert. Außerdem weist das Funkmodul eine Filtereinheit zum Filtern zumindest eines Teils der angepassten Kanalimpulsantworten wenigstens des zumindest einen Übertragungskanals in einer Zeitrichtung zum Erhalten eines spezifischen Filtersignals der gefilterten, angepassten Kanalimpulsantworten des zumindest einen Übertragungskanals auf. Weiter umfasst das Funkmodul eine Erkennungseinheit zum Erkennen der Veränderung des Übertragungskanalsystems wenigstens anhand des spezifischen Filtersignals des zumindest einen Übertragungskanals. Das Funkmodul kann ferner zumindest eine Sendeeinheit zum Senden eines Ultrabreitband-Sendesignals umfassen.

Das Funkmodul ist insbesondere für ein bzw. zum Überwachen des Fahrzeugs. Mit anderen Worten kann das Funkmodul für ein bzw. zum Überwachen des Fahrzeugs verwendet werden.

Das Funkmodul mit der Empfangseinheit, der Ermittlungseinheit, der Anpassungseinheit, der Filtereinheit und der Erkennungseinheit bildet insbesondere eine bauliche Einheit für das Fahrzeug aus. Somit kann ein Überwachen des Fahrzeuges besonders einfach und stromsparend erfolgen, da beispielsweise ein Fahrzeug-Steuergerät heruntergefahren bzw. in einem Ruhemodus versetzt werden kann. Ein erfindungsgemäßes Funksystem weist mehrere solcher Funkmodule auf.

Ferner ist denkbar, dass das Funkmodul als bauliche Einheit zu der Empfangseinheit, der Ermittlungseinheit, der Anpassungseinheit, der Filtereinheit, der Erkennungseinheit zusätzlich eine Sendeeinheit aufweist. Somit kann das Funkmodul als Sende- und/oder Empfangseinheit arbeiten. Insbesondere kann ein Funksystem mehrere solcher Funkmodule aufweisen.

Die Erkennungseinheit, insbesondere des Funkmoduls bzw. des Funksystems, kann bei einem Erkennen einer Veränderung des Übertragungskanalsystems bzw. bei einem Erkennen einer Veränderung zumindest eines Übertragungskanals wenigstens anhand des spezifischen Filtersignals des zumindest einen Übertragungskanals ein Steuersignal an ein Fahrzeug-Steuergerät senden, um eine festlegbare Reaktion auszulösen. Beispielsweise kann bei einem Überwachen des Fahrzeuges ein Alarm ausgelöst werden. Es ist auch denkbar, dass erst bei einer Mehrzahl an erkannten Veränderungen des zumindest einen Übertragungskanals eine festlegbare Reaktion ausgelöst wird.

Das Funkmodul gemäß dem zweiten Aspekt der Erfindung weist damit dieselben Vorteile auf, wie sie bereits zu dem erfindungsgemäßen Verfahren gemäß dem ersten Aspekt der Erfindung beschrieben worden sind.

Gemäß einem dritten Aspekt zeigt die vorliegende Erfindung ein Funksystem zum Erkennen einer Veränderung eines Übertragungskanalsystems eines Fahrzeuges mit zumindest einem Übertragungskanal, wobei das Funksystem dazu ausgebildet ist, ein erfindungsgemäßes Verfahren durchzuführen.

Das Funksystem ist insbesondere für ein bzw. zum Überwachen des Fahrzeuges. Mit anderen Worten kann das Funksystem für bzw. zum Überwachen des Fahrzeuges verwendet werden.

Vorzugsweise weist das erfindungsgemäße Funksystem zumindest eine Sendeeinheit und zumindest eine Empfangseinheit auf. Es ist jedoch auch denkbar, dass das Funksystem mehrere Sendeeinheiten und/oder mehrere Empfangseinheiten aufweist. Insbesondere bei einem Funksystem für ein Überwachen des Fahrzeuges ist die zumindest eine Empfangseinheit Teil eines erfindungsgemäßen Funkmoduls, das als bauliche Einheit die Empfangseinheit, eine Ermittlungseinheit, eine Anpassungseinheit, eine Filtereinheit und eine Erkennungseinheit aufweist.

Das Funksystem weist insbesondere zumindest eine Empfangseinheit und/oder eine Ermittlungseinheit und/oder eine Anpassungseinheit und/oder eine Filtereinheit und/oder eine Erkennungseinheit und/oder eine Sendeeinheit auf. Insbesondere können die Empfangseinheit und/oder die Ermittlungseinheit und/oder die Anpassungseinheit und/oder die Filtereinheit und/oder die Erkennungseinheit und/oder die Sendeeinheit örtlich fest in und/oder an dem Fahrzeug angeordnet sein. Es ist auch denkbar, dass ein mobiler Körper des Fahrzeugs, beispielsweise ein Fahrzeugschlüssel, zumindest einen Teil des Funksystems ausbildet. Insbesondere kann der mobile Körper die Empfangseinheit und/oder die Ermittlungseinheit und/oder die Anpassungseinheit und/oder die Filtereinheit und/oder die Erkennungseinheit und/oder die Sendeeinheit aufweisen.

Weist das Funksystem mehrere örtlich voneinander getrennt angeordnete Empfangseinheiten auf, so kann das Funksystem für die mehreren Übertragungskanäle eine gemeinsame Ermittlungseinheit und/oder Anpassungseinheit und/oder Filtereinheit und/oder Erkennungseinheit aufweisen. Somit kann das Funksystem besonders kompakt und kostengünstig sein.

Es kann weiter von Vorteil sein, wenn ein erfindungsgemäßes Funksystem zumindest ein erfindungsgemäßes Funkmodul, sowie zumindest eine Sendeeinheit zum Senden eines Sendesignals, insbesondere eines Ultrabreitband-Sendesignals, über ein Übertragungskanalsystem aufweist.

Das Funksystem gemäß dem dritten Aspekt der Erfindung weist damit dieselben Vorteile auf, wie sie bereits zu dem Verfahren gemäß dem ersten Aspekt der Erfindung bzw. dem Funkmodul gemäß dem zweiten Aspekt der Erfindung beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder den Zeichnungen hervorgehende Merkmale und/oder Vorteile, einschließlich konstruktiver Einzelheiten, räumliche Anordnungen und Verfahrensschritte, können sowohl für sich als auch in den verschiedenen Kombinationen erfindungswesentlich sein. Dabei ist zu beachten, dass die Figuren nur beschreibenden Charakter haben und nicht dazu gedacht sind, die Erfindung in irgendeiner Form einzuschränken.

Anhand der beigefügten Zeichnungen wird die Erfindung nachfolgend näher erläutert. Dabei zeigt:
- Fig. 1: eine Ausführungsform eines erfindungsgemäßen Verfahrens,
- Fig. 2: weitere Ausführungsformen eines erfindungsgemäßen Verfahrens,
- Fig. 3: eine Ausführungsform eines erfindungsgemäßen Verfahrens,
- Fig. 4: weitere Ausführungsformen eines erfindungsgemäßen Verfahrens,
- Fig. 5: eine Ausführungsform eines erfindungsgemäßen Funkmoduls,
- Fig. 6: eine Ausführungsform eines erfindungsgemäßen Funksystems, und
- Fig. 7: beispielhaft eine Mehrzahl an angepassten Kanalimpulsantworten eines Übertragungskanals über die Zeit.

In den nachfolgenden Figuren werden für die gleichen technischen Merkmale auch von unterschiedlichen Ausführungsbeispielen identische Bezugszeichen verwendet.

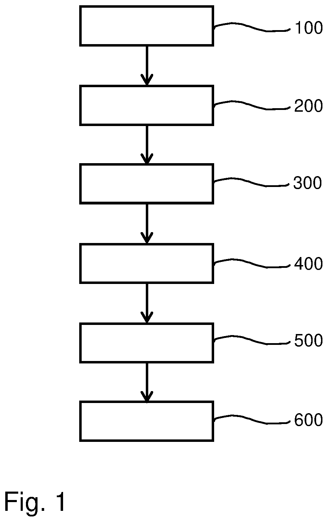

Figur 1 zeigt eine Ausführungsform eines erfindungsgemäßen Verfahrens zum Erkennen 600 einer Veränderung eines Übertragungskanalsystems eines Fahrzeuges mit zumindest einem Übertragungskanal. Das Verfahren weist als einen Schritt ein Senden 100 eines Ultrabreitband-Sendesignals mittels einer Sendeeinheit 10 über das Übertragungskanalsystem sowie als einen weiteren Schritt ein Empfangen 200 wenigstens eines auf dem Ultrabreitband-Sendesignal basierenden Empfangssignals mittels einer Empfangseinheit 20 sowie als einen weiteren Schritt ein Ermitteln 300 wenigstens einer Kanalimpulsantwort des zumindest einen Übertragungskanals des Fahrzeuges basierend auf dem Empfangssignal mittels einer Ermittlungseinheit 30 auf. Diese eben genannten Schritte, d. h. Senden 100 sowie Empfangen 200 sowie Ermitteln 300, werden mehrmalig wiederholt, um wenigstens eine Mehrzahl an Kanalimpulsantworten des zumindest einen Übertragungskanals zu ermitteln 300. Mit anderen Worten wird eine Mehrzahl an Kanalimpulsantworten über die Zeit ermittelt. Ein weiterer Schritt des erfindungsgemäßen Verfahrens ist ein jeweiliges Anpassen 400 zumindest eines Teils der ermittelten Kanalimpulsantworten der Mehrzahl an Kanalimpulsantworten des zumindest einen Übertragungskanals an eine bekannte Kanalimpulsantwort des zumindest einen Übertragungskanals des Fahrzeuges zu einer jeweiligen angepassten Kanalimpulsantwort mittels einer Anpassungseinheit 40 derart, dass sich ein aus der ermittelten Kanalimpulsantwort und der bekannten Kanalimpulsantwort ergebender Korrelationskoeffizient vergrößert. Durch diesen erfindungsgemäßen Schritt kann eine Mehrzahl an ermittelten Kanalimpulsantworten des zumindest einen Übertragungskanals derart aneinander angepasst, insbesondere verschoben und/oder skaliert und/oder interpoliert, werden 400, dass beispielsweise technische Ungenauigkeiten wie Abtastungenauigkeiten einer Empfangseinheit 20 verbessert ausgeglichen bzw. berücksichtigt werden. Somit kann eine "ruhige" zeitliche Folge an mehreren Kanalimpulsantworten erzeugt werden und ein Erkennen einer "wirklichen" Veränderung eines Übertragungskanalsystems eines Fahrzeuges besonders einfach, genau und/oder zuverlässig sein. Insbesondere kann zumindest ein Teil der ermittelten Kanalimpulsantworten der Mehrzahl an Kanalimpulsantworten des zumindest einen Übertragungskanals jeweils an eine auf einer zeitlich vorher ermittelten Kanalimpulsantwort basierenden Kanalimpulsantwort des zumindest einen Übertragungskanals angepasst werden 400. Alternativ oder zusätzlich hierzu ist auch denkbar, dass zumindest ein Teil der ermittelten Kanalimpulsantworten der Mehrzahl an Kanalimpulsantworten des zumindest einen Übertragungskanals an dieselbe bekannte Kanalimpulsantwort des zumindest einen Übertragungskanals angepasst werden. Das Verfahren umfasst als einen weiteren Schritt ein Filtern 500 zumindest eines Teils der angepassten Kanalimpulsantworten wenigstens des zumindest einen Übertragungskanals in einer Zeitrichtung mittels einer Filtereinheit 50 zum Erhalten eines spezifischen Filtersignals der gefilterten, angepassten Kanalimpulsantworten des zumindest einen Übertragungskanals. Das Filtern kann insbesondere mittels einem Hochpassfilter erfolgen. Außerdem weist das erfindungsgemäße Verfahren als einen weiteren Schritt ein Erkennen 600 der Veränderung des Übertragungskanalsystems wenigstens anhand des spezifischen Filtersignals des zumindest einen Übertragungskanals mittels einer Erkennungseinheit 60 auf. Zusätzlich kann die Erkennungseinheit 60 bei einer erkannten Veränderung des Übertragungskanalsystems ein Steuersignal an ein Steuergerät, insbesondere ein Fahrzeug-Steuergerät, senden, um eine entsprechende Reaktion, beispielsweise einen Alarm, auszulösen. Mit dem erfindungsgemäßen Verfahren kann ein Überwachen eines Fahrzeuges erfolgen.

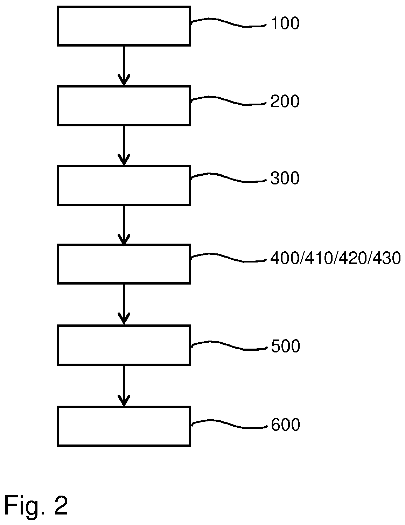

Figur 2 zeigt weitere Ausführungsformen eines erfindungsgemäßen Verfahrens zum Erkennen 600 einer Veränderung eines Übertragungskanalsystems eines Fahrzeuges mit zumindest einem Übertragungskanal, wobei die Verfahren in Figur 2 ebenfalls die zu Figur 1 genannten Schritte aufweisen. Weiter kann bei einem erfindungsgemäßen Verfahren für das jeweilige Anpassen 400 des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort interpoliert werden 410, um zumindest eine Hilfsstützstelle zwischen zwei Stützstellen der ermittelten Kanalimpulsantwort hinzuzufügen. Ferner kann bei einem erfindungsgemäßen Verfahren für das jeweilige Anpassen 400 des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort in Bezug auf die bekannte Kanalimpulsantwort des Übertragungskanals skaliert werden 420. Außerdem kann bei einem erfindungsgemäßen Verfahren für das jeweilige Anpassen 400 des zumindest einen Teils der ermittelten Kanalimpulsantworten an die bekannte Kanalimpulsantwort des zumindest einen Übertragungskanals zum Vergrößern des Korrelationskoeffizienten die ermittelte Kanalimpulsantwort zu der bekannten Kanalimpulsantwort des Übertragungskanals verschoben werden 430. Vorzugsweise werden alle drei Schritte, d. h. Interpolieren 410, Skalieren 420 sowie Verschieben 430 durchgeführt. Eine bevorzugte Reihenfolge dieser Schritte ist insbesondere, dass zuerst eine ermittelte Kanalimpulsantwort interpoliert wird 410, anschließend die ermittelte Kanalimpulsantwort in Bezug auf die bekannte Kanalimpulsantwort skaliert wird 420, und anschließend die ermittelte Kanalimpulsantwort zu der bekannten Kanalimpulsantwort verschoben wird 430, wobei diese Schritte derart erfolgen, dass sich ein aus der ermittelten Kanalimpulsantwort und der bekannten Kanalimpulsantwort ergebender Korrelationskoeffizient vergrößert, wobei insbesondere der Korrelationskoeffizient nach dem letzten der drei Schritte vergrößert ist.

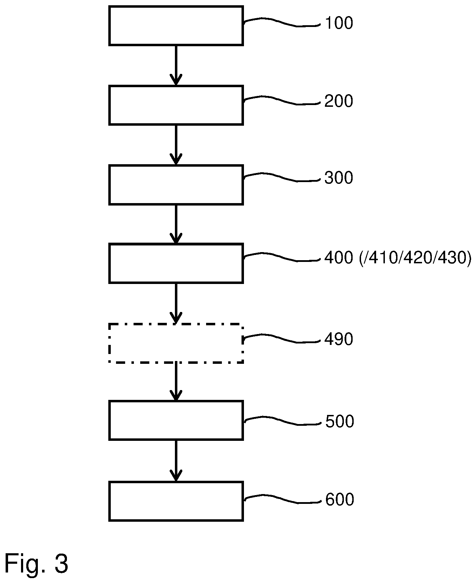

Figur 3 zeigt eine weitere Ausführungsform eines erfindungsgemäßen Verfahrens zum Erkennen 600 einer Veränderung eines Übertragungskanalsystems eines Fahrzeuges mit zumindest einem Übertragungskanal, wobei das Verfahren in Figur 3 ebenfalls die zu Figur 1 und/oder Figur 2 genannten Schritte zusätzlich aufweist bzw. aufweisen kann. Weiter können bei einem erfindungsgemäßen Verfahren zeitlich vor dem Filtern 500 mehrere angepasste Kanalimpulsantworten des zumindest einen Übertragungskanals des Fahrzeuges zu einer Ersatz-Kanalimpulsantwort miteinander verrechnet werden 490. Insbesondere können mehrere angepasste, zeitlich aufeinanderfolgende Kanalimpulsantworten des zumindest einen Übertragungskanals des Fahrzeuges zu der Ersatz-Kanalimpulsantwort miteinander verrechnet, insbesondere gemittelt, werden 490. Somit kann eine besonders inhaltsreiche Kanalimpulsantwort erhalten werden und ferner kann eine besonders "ruhige" zeitliche Folge an mehreren Ersatz-Kanalimpulsantworten erzeugt werden und ein Erkennen einer "wirklichen" Veränderung eines Übertragungskanalsystems eines Fahrzeuges besonders vorteilhaft sein.

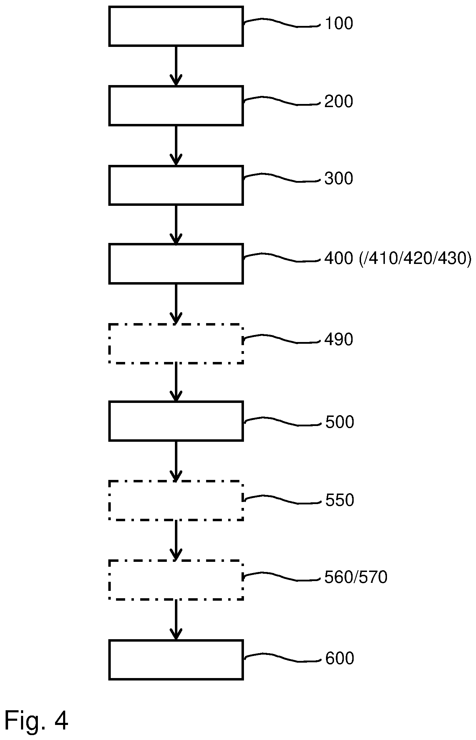

Figur 4 zeigt weitere Ausführungsformen eines erfindungsgemäßen Verfahrens zum Erkennen 600 einer Veränderung eines Übertragungskanalsystems eines Fahrzeuges mit zumindest einem Übertragungskanal, wobei die Verfahren in Figur 4 ebenfalls die zu Figur 1 und/oder Figur 2 und/oder Figur 3 genannten Schritte zusätzlich aufweisen können. Weiter kann bei einem erfindungsgemäßen Verfahren zum Erkennen 600 der Veränderung des Übertragungskanalsystems anhand wenigstens des spezifischen Filtersignals des zumindest einen Übertragungskanals das spezifische Filtersignal des zumindest einen Übertragungskanals mit einem vorgegebenen Signal für den zumindest einen Übertragungskanal verglichen werden 560. Insbesondere kann hierfür ein Mittelwert aus zumindest einem Teil des spezifischen Filtersignals des zumindest einen Übertragungskanals gebildet werden 550, wobei der gebildete Mittelwert mit einem Schwellwert verglichen wird 570. Ferner ist insbesondere denkbar, dass zum Erkennen 600 der Veränderung des Übertragungskanalsystems ein erster Mittelwert für einen erste Zeitabschnitt aus dem zumindest einen Teil des spezifischen Filtersignals des zumindest einen Übertragungskanals in Zeitrichtung dynamisch gebildet wird sowie dass ein zweiter Mittelwert für einen zweiten Zeitabschnitt aus dem zumindest einen Teil des spezifischen Filtersignals des zumindest einen Übertragungskanals in Zeitrichtung dynamisch gebildet wird, wobei der erste Zeitabschnitt zeitlich länger als der zweite Zeitabschnitt ist. Der erste Mittelwert kann somit eine Baseline darstellen und zum weiteren Tiefpassfiltern dienen. Vorzugsweise werden der erste Mittelwert und der zweite Mittelwert voneinander subtrahiert und ein Absolutwert gebildet, wobei der gebildete Absolutwert mit dem Schwellwert verglichen wird, um eine Veränderung des Übertragungskanalsystems zu erkennen. Insbesondere kann der Schwellwert zumindest ein Mehrfaches eines auf den ermittelten Kanalimpulsantworten basierenden Rauschwertes sein. Somit kann besonders zuverlässig eine Veränderung des Übertragungskanals des Übertragungskanalsystems erkannt werden.

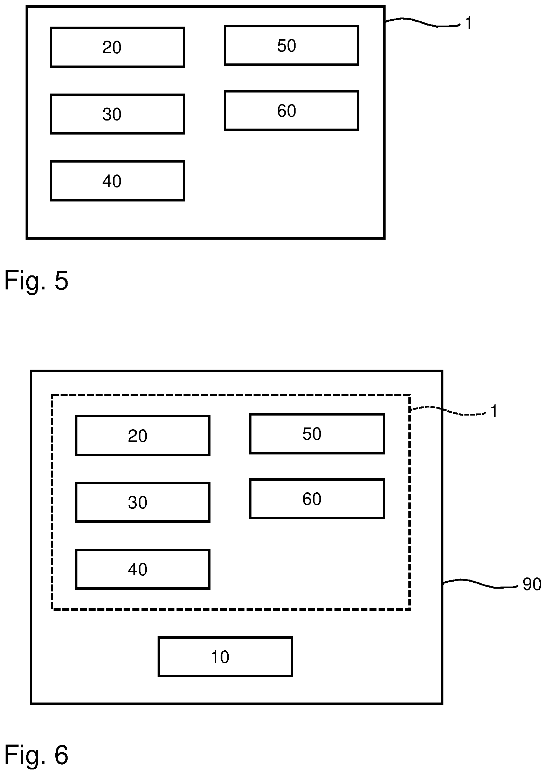

Figur 5 zeigt eine Ausführungsform eines erfindungsgemäßen Funkmoduls 1 für ein Funksystem 90 zum Erkennen einer Veränderung eines Übertragungskanalsystems eines Fahrzeuges mit zumindest einem Übertragungskanal, wobei das Funkmodul 1 zumindest eine Empfangseinheit 20 zum Empfangen eines auf dem Ultrabreitband-Sendesignals basierenden Empfangssignals aufweist. Ferner umfasst das Funkmodul 1 eine Ermittlungseinheit 30 zum Ermitteln zumindest einer Kanalimpulsantwort zumindest eines Übertragungskanals des Fahrzeuges basierend auf dem Empfangssignal, sowie eine Anpassungseinheit 40 zum Anpassen zumindest einer ermittelten Kanalimpulsantwort einer Mehrzahl an Kanalimpulsantworten an eine bekannte Kanalimpulsantwort des zumindest einen Übertragungskanals des Fahrzeuges zu einer jeweiligen angepassten Kanalimpulsantwort derart, dass ein sich aus der ermittelten Kanalimpulsantwort und der bekannten Kanalimpulsantwort ergebender Korrelationskoeffizient vergrößert. Außerdem weist das Funkmodul 1 eine Filtereinheit 50 zum Filtern zumindest eines Teils der angepassten Kanalimpulsantworten wenigstens des zumindest einen Übertragungskanals in einer Zeitrichtung zum Erhalten eines spezifischen Filtersignals der gefilterten, angepassten Kanalimpulsantworten des zumindest einen Übertragungskanals auf. Weiter umfasst das Funkmodul eine Erkennungseinheit 60 zum Erkennen der Veränderung des Übertragungskanalsystems wenigstens anhand des spezifischen Filtersignals des zumindest einen Übertragungskanals. Insbesondere bilden die Empfangseinheit 20, die Ermittlungseinheit 30, die Anpassungseinheit 40, die Filtereinheit 50 und die Erkennungseinheit 60 eine bauliche Einheit aus.

Figur 6 zeigt eine Ausführungsform eines erfindungsgemäßen Funksystems 90 zum Erkennen einer Veränderung eines Übertragungskanalsystems eines Fahrzeuges mit zumindest einem Übertragungskanal, wobei das Funksystem 90 dazu ausgebildet ist, ein erfindungsgemäßes Verfahren zum Erkennen einer Veränderung eines Übertragungskanalsystems durchzuführen. Das Funksystem 1 weist insbesondere zumindest ein erfindungsgemäßes Funkmodul 1 wie es bereits in Figur 5 beschrieben worden ist, sowie zumindest eine Sendeeinheit 10 zum Senden eines Sendesignals, insbesondere eines Ultrabreitband-Sendesignals, über ein Übertragungskanalsystem auf. Das Funksystem 1 kann auch mehrere Sendeeinheiten 10 zum jeweiligen Senden eines Ultrabreitband-Sendesignal und/oder mehrere Empfangseinheiten 20 zum jeweiligen Empfangen eines auf einem Ultrabreitband-Sendesignal basierenden Empfangssignal aufweisen. Somit kann das Erkennen einer Veränderung des Übertragungskanalsystems besonderes zuverlässig sein.

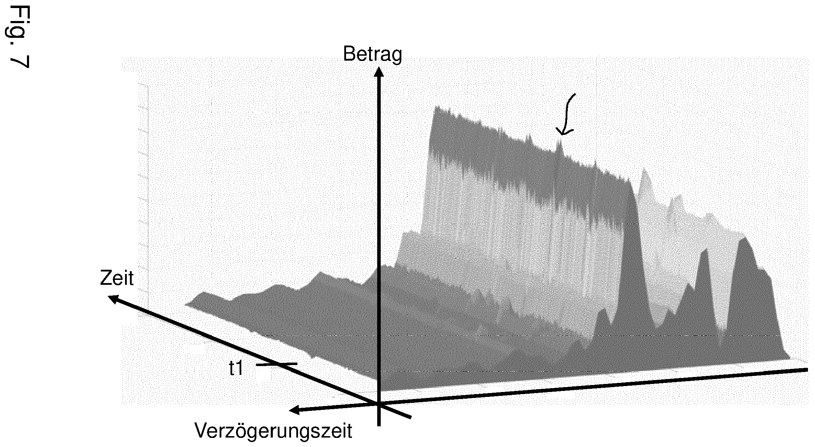

Figur 7 zeigt beispielhaft eine Mehrzahl, insbesondere eine Vielzahl, an erfindungsgemäß angepassten Kanalimpulsantworten über die Zeit. Eine einzelne angepasste Kanalimpulsantwort ist hierbei eine Funktion über eine Verzögerungszeit. Mittels der Verzögerungszeit wird eine Mehrwegeausbreitung des Ultrabreitband-Sendesignals der Kanalimpulsantwort erkennbar. Insbesondere weisen die lokalen Maxima auf zeitverzögerte Echos und/oder Reflektoren des Übertragungskanals hin. Durch das erfindungsgemäße Anpassen der ermittelten Kanalimpulsantworten an eine bekannte Kanalimpulsantwort des zumindest einen Übertragungskanals des Fahrzeuges zu den dargestellten angepassten Kanalimpulsantworten werden beispielsweise technische Ungenauigkeiten einer Empfangseinheit wie Abtastungenauigkeiten und damit einhergehende zeitliche Verschiebungen in Verzögerungszeitrichtung und/oder betragsmäßige Amplitudenschwankungen berücksichtigt. Somit kann eine "ruhige" zeitliche Folge an mehreren Kanalimpulsantworten über die Zeit erzeugt werden. Insbesondere kann somit an zumindest einer charakteristischen Stelle, beispielsweise einem Maximum der angepassten Kanalimpulsantworten, dass somit eine Veränderung eines Übertragungskanals über die Zeit besonders vorteilhaft erkennbar wird. In Figur 7 wird durch die erfindungsgemäß angepassten Kanalimpulsantworten erkennbar, dass sich der Übertragungskanal über die Zeit zumindest einmal verändert hat, beispielsweise zum Zeitpunkt t1 bzw. in einem Zeitbereich um den Zeitpunkt t1 herum. Das Maximum der angepassten Kanalimpulsantworten zu einer (bestimmbaren) Verzögerungszeit weist hierbei eine erkennbare Veränderung (siehe Pfeil in Figur 7) im Betrag auf, nämlich eine Vergrößerung.

### Bezugszeichenliste

- 1: Funkmodul
- 10: Sendeeinheit
- 20: Empfangseinheit
- 30: Ermittlungseinheit
- 40: Anpassungseinheit
- 50: Filtereinheit
- 60: Erkennungseinheit
- 90: Funksystem

- 100: Senden eines Ultrabreit-Sendesignals
- 200: Empfangen eines Empfangssignals
- 300: Ermitteln wenigstens einer Kanalimpulsantwort des Übertragungskanals
- 400: Anpassen einer ermittelten Kanalimpulsantwort an eine bekannte Kanalimpulsantwort
- 410: Interpolieren der ermittelten Kanalimpulsantwort
- 420: Skalieren der ermittelten Kanalimpulsantwort in Bezug auf die bekannte Kanalimpulsantwort
- 430: Verschieben der ermittelten Kanalimpulsantwort zu der bekannten Kanalimpulsantwort
- 490: Mitteln mehrerer angepasster Kanalimpulsantworten
- 500: Filtern zumindest eines Teils der Mehrzahl an angepassten Kanalimpulsantworten in einer Zeitrichtung
- 550: Bilden eines Mittelwerts aus zumindest einem Teil der Mehrzahl an gefilterten Kanalimpulsantworten
- 560: Vergleichen des spezifischen Filtersignals mit einem vorgegebenen Signal
- 570: Vergleichen des gebildeten Mittelwerts mit einem Schwellwert
- 600: Erkennen der Veränderung des Übertragungskanals
- t1: Zeitpunkt

## Patentansprüche

1. Verfahren zum Erkennen (600) einer Veränderung eines Übertragungskanalsystems eines Fahrzeuges mit zumindest einem Übertragungskanal, wobei das Verfahren die folgenden Schritte aufweist:
a) Senden (100) eines Ultrabreitband-Sendesignals mittels einer Sendeeinheit (10) über das Übertragungskanalsystem,
b) Empfangen (200) wenigstens eines auf dem Ultrabreitband-Sendesignal basierenden Empfangssignals mittels einer Empfangseinheit (20),
c) Ermitteln (300) wenigstens einer Kanalimpulsantwort des zumindest einen Übertragungskanals des Fahrzeuges basierend auf dem Empfangssignal mittels einer Ermittlungseinheit (30),
- mehrmaliges Wiederholen der Schritte a) bis c) zum Ermitteln (300) wenigstens einer Mehrzahl an Kanalimpulsantworten des zumindest einen Übertragungskanals,
- jeweiliges Anpassen (400) zumindest eines Teils der ermittelten Kanalimpulsantworten der Mehrzahl an Kanalimpulsantworten des zumindest einen Übertragungskanals an eine bekannte Kanalimpulsantwort des zumindest einen Übertragungskanals des Fahrzeuges zu einer jeweiligen angepassten Kanalimpulsantwort mittels einer Anpassungseinheit (40) derart, dass sich ein aus der ermittelten Kanalimpulsantwort und der bekannten Kanalimpulsantwort ergebender Korrelationskoeffizient vergrößert,
- Filtern (500) des zumindest einen Teils der angepassten Kanalimpulsantworten wenigstens des zumindest einen Übertragungskanals in einer Zeitrichtung mittels einer Filtereinheit (50) zum Erhalten eines spezifischen Filtersignals der gefilterten, angepassten Kanalimpulsantworten des zumindest einen Übertragungskanals,
- Erkennen (600) der Veränderung des Übertragungskanalsystems wenigstens anhand des spezifischen Filtersignals des zumindest einen Übertragungskanals mittels einer Erkennungseinheit (60).

2. Verfahren nach Anspruch 1,
wobei zum Erkennen (600) der Veränderung des Übertragungskanalsystems anhand wenigstens des spezifischen Filtersignals des zumindest einen Übertragungskanals das spezifische Filtersignal des zumindest einen Übertragungskanals mit einem vorgegebenen Signal für den zumindest einen Übertragungskanal verglichen wird (560).

3. Verfahren nach Anspruch 1 oder 2,
wobei zum Erkennen (600) der Veränderung des Übertragungskanalsystems wenigstens anhand des spezifischen Filtersignals des zumindest einen Übertragungskanals ein Mittelwert aus zumindest einem Teil des spezifischen Filtersignals des zumindest einen Übertragungskanals gebildet wird (550), wobei der gebildete Mittelwert mit einem Schwellwert verglichen wird (570).

4. Verfahren nach einem der vorangegangenen Ansprüche,
wobei für das jeweilige Anpassen (400) des zumindest einen Teils der ermittelten Kanalimpulsantworten an die bekannte Kanalimpulsantwort des zumindest einen Übertragungskanals zum Vergrößern des Korrelationskoeffizienten die ermittelte Kanalimpulsantwort zu der bekannten Kanalimpulsantwort des Übertragungskanals verschoben wird (430).

5. Verfahren nach einem der vorangegangenen Ansprüche,
wobei für das jeweilige Anpassen (400) des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort in Bezug auf die bekannte Kanalimpulsantwort des Übertragungskanals skaliert wird (420).

6. Verfahren nach einem der vorangegangenen Ansprüche,
wobei für das jeweilige Anpassen (400) des zumindest einen Teils der ermittelten Kanalimpulsantworten des zumindest einen Übertragungskanals an die bekannte Kanalimpulsantwort des zumindest einen Übertragungskanals zum Vergrößern des Korrelationskoeffizienten die ermittelte Kanalimpulsantwort interpoliert wird (410), um zumindest eine Hilfsstützstelle zwischen zwei Stützstellen der ermittelten Kanalimpulsantwort hinzuzufügen.

7. Verfahren nach einem der vorangegangenen Ansprüche,
wobei zumindest ein Teil der ermittelten Kanalimpulsantworten der Mehrzahl an Kanalimpulsantworten des zumindest einen Übertragungskanals jeweils an eine auf einer zeitlich vorher ermittelten Kanalimpulsantwort basierenden Kanalimpulsantwort des zumindest einen Übertragungskanals angepasst werden (400).

8. Verfahren nach einem der vorangegangenen Ansprüche,
wobei zumindest ein Teil der ermittelten Kanalimpulsantworten der Mehrzahl an Kanalimpulsantworten des zumindest einen Übertragungskanals an dieselbe bekannte Kanalimpulsantwort des zumindest einen Übertragungskanals angepasst werden (400).

9. Verfahren nach einem der vorangegangenen Ansprüche,
wobei eine ermittelte Kanalimpulsantwort der Mehrzahl an Kanalimpulsantworten des zumindest einen Übertragungskanals an die bekannte Kanalimpulsantwort des zumindest einen Übertragungskanals der jeweiligen angepassten Kanalimpulsantwort derart angepasst wird (400), dass sich der aus der ermittelten Kanalimpulsantwort und der bekannten Kanalimpulsantwort ergebende Korrelationskoeffizient maximiert.

10. Verfahren nach einem der vorangegangenen Ansprüche,
wobei das Filtern (500) zumindest eines Teils der angepassten Kanalimpulsantworten des zumindest einen Übertragungskanals in der Zeitrichtung mittels einem Hochpassfilter erfolgt.

11. Verfahren nach einem der vorangegangenen Ansprüche,
wobei das Ultrabreitband-Sendesignal zumindest ein Sounding-Signal, vorzugsweise zumindest zwei unterschiedliche Sounding-Signale aufweist.

12. Verfahren nach einem der vorangegangenen Ansprüche,
wobei zeitlich vor dem Filtern (500) mehrere angepasste Kanalimpulsantworten des zumindest einen Übertragungskanals des Fahrzeuges zu einer Ersatz-Kanalimpulsantwort miteinander verrechnet, insbesondere gemittelt, werden (490).

13. Verfahren nach einem der vorangegangenen Ansprüche,
wobei mehrere Empfangseinheiten (20) basierend auf dem gesendeten Ultrabreitband-Sendesignal jeweils ein Empfangssignal empfangen, um die Veränderung des Übertragungskanalsystems des Fahrzeuges zu erkennen (600).

14. Verfahren nach einem der vorangegangenen Ansprüche,
wobei mehrere Sendeeinheiten (10) jeweils ein Ultrabreitband-Sendesignal senden, um die Veränderung des Übertragungskanalsystems des Fahrzeuges zu erkennen (600).

15. Verfahren nach Anspruch 14,
wobei das Senden der Ultrabreitband-Sendesignale mittels der mehreren Sendeeinheiten (10) zeitversetzt erfolgt.

16. Funkmodul (1) für ein Funksystem (90) zum Erkennen einer Veränderung eines Übertragungskanalsystems eines Fahrzeuges mit zumindest einem Übertragungskanal, wobei das Funkmodul (1) aufweist:
- zumindest eine Empfangseinheit (20) zum Empfangen eines auf einem Ultrabreitband-Sendesignals basierenden Empfangssignals,
- eine Ermittlungseinheit (30) zum Ermitteln zumindest einer Kanalimpulsantwort zumindest eines Übertragungskanals des Fahrzeuges basierend auf dem Empfangssignal,
- eine Anpassungseinheit (40) zum Anpassen zumindest einer ermittelten Kanalimpulsantwort einer Mehrzahl an Kanalimpulsantworten an eine bekannte Kanalimpulsantwort des zumindest einen Übertragungskanals des Fahrzeuges zu einer jeweiligen angepassten Kanalimpulsantwort derart, dass ein sich aus der ermittelten Kanalimpulsantwort und der bekannten Kanalimpulsantwort ergebender Korrelationskoeffizient vergrößert,
- eine Filtereinheit (50) zum Filtern zumindest eines Teils der angepassten Kanalimpulsantworten wenigstens des zumindest einen Übertragungskanals in einer Zeitrichtung zum Erhalten eines spezifischen Filtersignals der gefilterten, angepassten Kanalimpulsantworten des zumindest einen Übertragungskanals,
- eine Erkennungseinheit (60) zum Erkennen der Veränderung des Übertragungskanalsystems wenigstens anhand des spezifischen Filtersignals des zumindest einen Übertragungskanals,
- zumindest eine Sendeeinheit (10) zum Senden des Ultrabreitband-Sendesignals.

17. Funksystem (90) zum Erkennen einer Veränderung eines Übertragungskanalsystems eines Fahrzeuges mit zumindest einem Übertragungskanal, wobei das Funksystem (90) dazu ausgebildet ist, ein Verfahren nach einem der Ansprüche 1 bis 15 durchzuführen, **dadurch gekennzeichnet,**
**dass** das Funksystem (90) aufweist:
- mehrere Funkmodule (1) nach Anspruch 16,
- zumindest eine Sendeeinheit (10) zum Senden eines Sendesignals, insbesondere eines Ultrabreitband-Sendesignals, über ein Übertragungskanalsystem.

## Claims

1. A method for detecting (600) a change in a communications channel system of a motor vehicle with at least one communications channel, the said method comprising the following steps:
a) Transmitting (100) an ultra-wideband transmission signal by means of a transmission unit (10) via the communications channel system,
b) Receiving (200) at least one reception signal based on the ultra-wideband transmission signal by means of a reception unit (20),
c) Determining (300) at least one channel impulse response of the at least one communications channel of the motor vehicle based on the reception signal by means of a determination unit (30),
- Repeating steps a) to c) several times to determine (300) at least one plurality of channel impulse responses of the at least one communications channel,
- Respectively adapting (400) at least a part of the determined channel impulse responses of the plurality of channel impulse responses of the at least one communications channel to a known channel impulse response of the at least one communications channel of the motor vehicle to a respective adapted channel impulse response by means of an adaptation unit (40) in such a way that a correlation coefficient resulting from the determined channel impulse response and the known channel impulse response increases,
- Filtering (500) the at least one part of the adapted channel impulse responses at least of the at least one communications channel in a time direction by means of a filter unit (50) to obtain a specific filter signal of the filtered, adapted channel impulse responses of the at least one communications channel,
- Detecting (600) the change in the communications channel system at least on the basis of the specific filter signal of the at least one communications channel by means of a detection unit (60).

2. A method according to claim 1,
in which for detection (600) of the change in the communications channel system by means of at least the specific filter signal of the at least one communications channel, the specific filter signal of the at least one communications channel is compared (560) with a predetermined signal for the at least one communications channel.

3. A method according to claim 1 or 2,
in which for detection (600) of the change in the communications channel system by means of at least the specific filter signal of the at least one communications channel, a mean value is formed (550) from at least a part of the specific filter signal of the at least one communications channel, said mean value formed being compared (570) with a threshold value.

4. A method according to one of the previous claims,
in which for the respective adaptation (400) of the at least one part of the determined channel impulse responses to the known channel impulse response of the at least one communications channel for increasing the correlation coefficient, the determined channel impulse response is shifted (430) to the known channel impulse response of the communications channel.

5. A method according to one of the previous claims,
in which for the respective adaptation (400) of the at least one part of the determined channel impulse responses of the at least one communications channel to the known channel impulse response of the at least one communications channel for increasing the correlation coefficient, the determined channel impulse response is scaled (420) in relation to the known channel impulse response of the communications channel.

6. A method according to one of the previous claims,
in which for the respective adaptation (400) of the at least one part of the determined channel impulse responses of the at least one communications channel to the known channel impulse response of the at least one communications channel for increasing the correlation coefficient, the determined channel impulse response is interpolated (410) in order to add at least one auxiliary support point between two support points of the determined channel impulse response.

7. A method according to one of the previous claims,
in which at least a part of the determined channel impulse responses of the plurality of channel impulse responses of the at least one communications channel are each adapted (400) to a channel impulse response of the at least one communications channel based on a channel impulse response determined at an earlier point in time.

8. A method according to one of the previous claims,
in which at least a part of the determined channel impulse responses of the plurality of channel impulse responses of the at least one communications channel is adapted (400) to the same known channel impulse response of the at least one communications channel.

9. A method according to one of the previous claims,
in which a determined channel impulse response of the plurality of channel impulse responses of the at least one communications channel is adapted (400) to the known channel impulse response of the at least one communications channel of the respective adapted channel impulse response in such a way that the correlation coefficient resulting from the determined channel impulse response and the known channel impulse response is maximized.

10. A method according to one of the previous claims,
in which filtering (500) of at least a part of the adapted channel impulse responses of the at least one communications channel is carried out in time direction by means of a high-pass filter.

11. A method according to one of the previous claims,
in which the ultra-wideband transmission signal has at least one sounding signal, preferably at least two different sounding signals.

12. A method according to one of the previous claims,
in which a plurality of adapted channel impulse responses of the at least one communications channel of the motor vehicle are offset with one another, in particular averaged (490) to form a substitute channel impulse response temporally prior to filtering (500).

13. A method according to one of the previous claims,
in which a plurality of reception units (20) each receive a reception signal based on the transmitted ultra-wideband transmission signal in order to detect (600) the change in the communications channel system of the motor vehicle.

14. A method according to one of the previous claims,
in which a plurality of transmission units (10) each transmit an ultra-wideband transmission signal in order to detect (600) the change in the communications channel system of the motor vehicle.

15. A method according to claim 14,
in which the transmission of the ultra-wideband transmission signals by means of the plurality of transmission units (10) is staggered in time.

16. A radio module (1) for a radio system (90) for detecting a change in a communications channel system of a motor vehicle having at least one communications channel in which the radio module (1) comprises:
- at least one reception unit (20) for receiving a reception signal based on an ultra-wideband transmission signal,
- a determination unit (30) for determining at least one channel impulse response of at least one communications channel of the motor vehicle based on the reception signal,
- an adaptation unit (40) for adapting at least one determined channel impulse response of a plurality of channel impulse responses to a known channel impulse response of the at least one communications channel of the motor vehicle to a respective adapted channel impulse response in such a way that a correlation coefficient resulting from the determined channel impulse response and the known channel impulse response increases,
- a filter unit (50) for filtering at least a part of the adapted channel impulse responses at least of the at least one communications channel in a time direction to obtain a specific filter signal of the filtered, adapted channel impulse responses of the at least one communications channel,
- a detection unit (60) for detecting the change in the communications channel system at least on the basis of the specific filter signal of the at least one communications channel,
- at least one transmission unit (10) for transmitting an ultra-wideband transmission signal.

17. A radio system (90) for detecting a change in a communications channel system of a motor vehicle having at least one communications channel, said radio system (90) being designed to perform a method according to one of claims 1 to 15, **characterized in that**
the radio system (90) comprises:
- multiple radio modules (1) according to claim 16,
- at least one transmission unit (10) for transmitting a transmission signal, in particular an ultra-wideband transmission signal, via a communications channel system.

## Revendications

1. Procédé de détection (600) d'un changement dans un système de canal de communication d'un véhicule ayant au moins un canal de communication, le procédé comprenant les étapes suivantes :
a) Émission (100) d'un signal d'émission à ultralarge spectre au moyen d'une unité d'émission (10) par l'intermédiaire du système de canal de communication,
b) Réception (200) d'au moins un signal de réception basé sur le signal d'émission à ultralarge spectre au moyen d'une unité de réception (20),
c) Détermination (300) d'au moins une réponse impulsionnelle de canal d'au moins un canal de communication du véhicule sur la base du signal de réception au moyen d'une unité de détermination (30),
- Répétition multiple des étapes a) à c) pour déterminer (300) au moins plusieurs réponses impulsionnelles de canal d'au moins un canal de communication,
- Adaptation respective (400) d'au moins une partie des multiples réponses impulsionnelles de canal déterminées d'au moins un canal de communication à une réponse impulsionnelle de canal connue d'au moins un canal de communication du véhicule en une réponse impulsionnelle de canal adaptée au moyen d'une unité d'adaptation (40) de telle sorte qu'un coefficient de corrélation résultant de la réponse impulsionnelle de canal déterminée et de la réponse impulsionnelle de canal connue augmente,
- Filtrage (500) d'au moins une partie des réponses impulsionnelles de canal adaptées d'au moins un canal de communication dans une direction temporelle au moyen d'une unité de filtrage (50) pour obtenir un signal de filtrage spécifique des réponses impulsionnelles de canal adaptées filtrées d'au moins un canal de communication,
- Détection (600) de la modification du système de canal de communication au moins à l'aide du signal de filtrage spécifique d'au moins un canal de communication au moyen d'une unité de détection (60).

2. Procédé selon la revendication 1,
dans lequel le signal de filtrage spécifique d'au moins un canal de communication est comparé (560) à un signal prédéterminé pour au moins un canal de communication pour détecter (600) la modification du système de canal de communication à l'aide d'au moins le signal de filtrage spécifique d'au moins un canal de communication.

3. Procédé selon la revendication 1 ou 2,
dans lequel on forme une valeur moyenne d'au moins une partie du signal de filtrage spécifique d'au moins un canal de communication (550), au moins à l'aide du signal de filtrage spécifique d'au moins un canal de communication, pour détecter (600) la modification du système de canal de communication, la valeur moyenne formée étant comparée à une valeur de seuil (570).

4. Procédé selon l'une des revendications précédentes,
dans lequel, pour l'adaptation respective (400) d'au moins une partie des réponses impulsionnelles de canal déterminées à la réponse impulsionnelle de canal connue d'au moins un canal de communication pour augmenter le coefficient de corrélation, la réponse impulsionnelle de canal déterminée est décalée par rapport à la réponse impulsionnelle de canal connue du canal de communication (430).

5. Procédé selon l'une des revendications précédentes,
dans lequel, pour l'adaptation respective (400) d'au moins une partie des réponses impulsionnelles de canal déterminées à la réponse impulsionnelle de canal connue d'au moins un canal de communication pour augmenter le coefficient de corrélation, la réponse impulsionnelle de canal déterminée est mise à l'échelle par rapport à la réponse impulsionnelle de canal connue du canal de communication (420).

6. Procédé selon l'une des revendications précédentes,
dans lequel, pour l'adaptation respective (400) d'au moins une partie des réponses impulsionnelles de canal déterminées à la réponse impulsionnelle de canal connue d'au moins un canal de communication pour augmenter le coefficient de corrélation, la réponse impulsionnelle de canal déterminée interpolée pour ajouter au moins un point d'appui auxiliaire entre deux points d'appui de la réponse impulsionnelle de canal déterminée (410).

7. Procédé selon l'une des revendications précédentes,
dans lequel au moins une partie des multiples réponses impulsionnelles de canal déterminées d'au moins un canal de communication sont respectivement adaptées à une réponse impulsionnelle de canal d'au moins un canal de communication basée sur une réponse impulsionnelle de canal prédéterminée (400).

8. Procédé selon l'une des revendications précédentes,
dans lequel au moins une partie des multiples réponses impulsionnelles de canal déterminées d'au moins un canal de communication sont adaptées à la même réponse impulsionnelle de canal connue d'au moins un canal de communication (400).

9. Procédé selon l'une des revendications précédentes,
dans lequel une des multiples réponses impulsionnelles de canal déterminées d'au moins un canal de communication est adaptée à la réponse impulsionnelle de canal connue d'au moins un canal de communication de la réponse impulsionnelle de canal adaptée respective de manière à maximiser le coefficient de corrélation résultant de la réponse impulsionnelle de canal déterminée et de la réponse impulsionnelle de canal connue (400).

10. Procédé selon l'une des revendications précédentes,
dans lequel le filtrage (500) d'au moins une partie des réponses impulsionnelles de canal adaptées d'au moins un canal de communication dans la direction temporelle est réalisé au moyen d'un filtre passe-haut.

11. Procédé selon l'une des revendications précédentes,
dans lequel le signal d'émission à ultralarge spectre comprend au moins un signal de sonorisation, de préférence au moins deux signaux de sonorisation différents.

12. Procédé selon l'une des revendications précédentes,
dans lequel plusieurs réponses impulsionnelles de canal adaptées d'au moins un canal de communication du véhicule sont utilisées pour le calcul (490), en particulier pour établir leur moyenne, et établir une réponse impulsionnelle de canal de remplacement avant le filtrage (500).

13. Procédé selon l'une des revendications précédentes,
dans lequel plusieurs unités de réception (20) reçoivent chacune un signal de réception sur la base du signal d'émission à ultralarge spectre émis afin de détecter (600) la modification du système de canal de communication du véhicule.

14. Procédé selon l'une des revendications précédentes,
dans lequel plusieurs unités d'émission (10) émettent chacune un signal d'émission à ultralarge spectre afin de détecter (600) la modification du système de canal de communication du véhicule.

15. Procédé selon la revendication 14,
dans lequel l'émission des signaux d'émission à ultralarge spectre s'effectuent de manière décalée dans le temps au moyen des multiples unités d'émission (10).

16. Module radio (1) pour un système radio (90) pour la détection d'une modification d'un système de canal de communication d'un véhicule avec au moins un canal de communication, le module radio (1) comprenant :
- au moins une unité de réception (20) pour la réception d'un signal de réception basé sur un signal d'émission à ultralarge spectre,
- une unité de détermination (30) pour la détermination d'au moins une réponse impulsionnelle de canal d'au moins un canal de communication du véhicule sur la base du signal de réception,
- une unité d'adaptation (40) pour l'adaptation d'au moins une réponse impulsionnelle de canal déterminée de plusieurs réponses impulsionnelles de canal à une réponse impulsionnelle de canal connue d'au moins un canal de communication du véhicule en une réponse impulsionnelle de canal adaptée respective afin d'augmenter un coefficient de corrélation résultant de la réponse impulsionnelle de canal déterminée et de la réponse impulsionnelle de canal connue,
- une unité de filtrage (50) pour la filtration d'au moins une partie des réponses d'impulsion de canal adaptées d'au moins un canal de communication dans une direction temporelle pour obtenir un signal de filtrage spécifique des réponses d'impulsion de canal adaptées filtrées d'au moins un canal de communication,
- une unité de détection (60) pour la détection de la modification du système de canal de communication au moins à l'aide du signal de filtrage spécifique d'au moins un canal de communication,
- au moins une unité d'émission (10) pour l'émission du signal d'émission à ultralarge spectre.

17. Système radio (90) pour la détection d'une modification d'un système de canal de communication d'un véhicule comportant au moins un canal de communication, le système radio (90) étant conçu pour exécuter un procédé selon l'une des revendications 1 à 15, **caractérisé en ce que**
le système radio (90) comprend :
- plusieurs modules radio (1) selon la revendication 16,
- au moins une unité d'émission (10) pour l'émission d'un signal d'émission, notamment d'un signal d'émission à ultralarge spectre, via un système de canal de communication.
